# EUROPÄISCHE PATENTANMELDUNG

(11) **EP 2 796 661 A2**
(43) Veröffentlichungstag der Anmeldung: **29.10.2014**
(21) Anmeldenummer: 14001031.5
(22) Anmeldetag: 20.03.2014
(51) Int. Cl.: E21B 33/13, E21B 47/00, E21B 47/09, F24J 3/08

(54) **Verfahren zum füllen eines Raumes mit einer fliessfähigen Verfüllmasse, Trockenmischung und daraus hergestellte fliessfähige Verfüllmasse**

(30) Priorität: 27.03.2013 DE 102013006229
(71) Anmelder: SCHWENK Zement KG, 89077 Ulm (DE)
(72) Erfinder:
(74) Vertreter: Leinweber & Zimmermann

(57) **Zusammenfassung**

Verfahren zum Füllen eines Raumes, insbesondere Hohlraumes, mit einer fließfähigen Verfüllmasse, bei dem die Verfüllmasse in den Raum eingebracht wird und dort aufgrund eines enthaltenen hydraulischen Bindemittelanteils durch Hydratisierung erstarrt, wobei lokale Inhomogenitäten in der Dichteverteilung der in dem Raum eingebrachten Verfüllmasse, insbesondere nicht von der Verfüllmasse eingenommene Raumbereiche, aufgrund eines in der Verfüllmasse enthaltenen Anteils eines magnetisch detektierbaren Materials erkennbar sind, nach Flüssigkeitszugabe zu einer fließfähigen Verfüllmasse verarbeitbare Trockenmischung sowie fließfähige Verfüllmasse.

## Beschreibung

Die Erfindung betrifft ein Verfahren zum Füllen eines Raumes, insbesondere Hohlraumes, mit einer fließfähigen Verfüllmasse, bei dem die Verfüllmasse in den Raum eingebracht wird und dort aufgrund eines enthaltenen hydraulischen Bindemittelanteils durch Hydratisierung erstarrt, eine nach Flüssigkeitszugabe zu einer fließfähigen Verfüllmasse verarbeitbare Trockenmischung, sowie eine fließfähige Verfüllmasse.

Derartige Verfahren sind in der Technik gut bekannt, beispielsweise durch DE 10 2004 039 107 A1 oder DE 10 2007 031 418 B3. Sie kommen beispielsweise beim Abteufen von Bohrungen in das Erdreich zur Aufnahme von Erdwärmesonden (Geothermiesonden) zum Einsatz, wie im folgenden genauer erläutert wird.

Grundidee der Geothermiesonde ist die Nutzung des Erdreiches als Wärmequelle oder Wärmetauschpartner für einen oberhalb der Erdoberfläche angeordneten Wärmetauschpartner mittels eines über die Geothermiesonde zirkulierenden Fluids. So kann der Wärmetauschpartner an der Oberfläche, bei dem es sich z.B. durchaus auch um einen Teil eines Wärmereguliersystemes eines privaten Verbrauchers handeln könnte, bei herrschender Kälte auf das von Lufttemperatur und Witterung nicht mehr beeinflusste Temperaturniveau im Erdreich zurückgreifen. Bei Hitze kann entsprechend ein Zugriff auf ein kälteres Temperaturniveau erfolgen und somit eine Kühlung bewirkt werden.

Je nach speziellem Einsatzzweck werden zur Aufnahme der Geothermiesonden daher Bohrungen mit einer Tiefe von wenigen Metern bis hin zu mehreren hundert Metern geschaffen, die senkrecht aber auch geneigt verlaufen können. Die Geothermiesonde wird dann in das Bohrloch eingebracht und ggf. mit an der Sonde befestigten Abstandshaltern im Bohrloch zentriert. Dabei kann die Sonde als Koaxialrohr, als Korb oder als einfaches oder mehrsträngiges U-Rohr ausgeführt sein. Bei nicht geschlossenen Zirkulationen und großer Bohrlochtiefe (in Deutschland rechnet man mit einem Temperaturanstieg pro hundert Meter Tiefe um etwa 3°C) gibt es auch als Direktverdampfer wirkende Ausführungen der Sonde als Einfachrohr.

Zwischen der eingebrachten Geothermiesonde und dem umgebenden Erdreich, genauer gesagt der Bohrungswand entsteht ein Ringraum oder hohlzylindrischer Raum, der mit der fließfähigen Verfüllmasse aufgefüllt wird, um die Sonde zu halten (zu stabilisieren) und auch zu schützen. Daneben hat die Verfüllmasse noch eine Abdichtung zu bewirken. Denn bekannterweise werden beim Abteufen insbesondere tiefergehender Bohrungen auch mehrfach Sperrschichten zwischen Grundwasserleitern durchbrochen. Aus Belangen des Grundwasserschutzes ist für eine vertikale Abdichtung zwischen unterschiedlichen Grund- und Kluftwasserhorizonten zu sorgen, d.h. ein Fließen von Grundwasser durch die durchbrochenen Sperrschichten zu verhindern, um einen sogenannten hydraulischen Kurzschluss zu vermeiden.

Das Einbringen der fließfähigen Verfüllmasse in den Ringraum kann beispielsweise und auch bei der vorliegenden Erfindung dadurch erfolgen, dass die fließfähige Verfüllmasse pumpfähig ist und über eine geeignete Pumpeinrichtung durch den zentralen Innenraum zum Boden des Bohrloches gepumpt wird. Von dort steigt die Verfüllmasse dann im Ringraum auf bis zur gewünschten Verfüllhöhe. Aufgrund des in der Verfüllmasse enthaltenen Anteils eines hydraulischen Bindemittels erfolgt dann ein Erstarren der Verfüllmasse durch Hydratisierung, und die Geothermiesonde wird von der erstarrten Verfüllmasse umgeben, die dann auch die Verbindung zwischen der Geothermiesonde und dem umgebenden Erdreich (Gebirge) herstellt.

Bei idealem Verlauf dieses Verfahrens wird der aufzufüllende Raum gleichmäßig mit der Verfüllmasse hinterfüllt, deren Dichteverteilung in dem Raum somit idealerweise homogen wäre. In der Praxis zeigt sich aber immer wieder, dass die Verfüllmasse die Geothermiesonden nicht vollständig umschließt. Beispielsweise werden Wasser, Bohrspülung oder Lufteinschlüsse im Bohrloch nicht vollständig ausgetrieben. Auch Brücken- oder Pfropfenbildung kann für Inhomogenitäten in der Dichteverteilung sorgen. Insbesondere im Bereich von Verjüngungen, aber auch im Bereich der Abstandshalter können entsprechende Fehlstellen entstehen, also nicht von der Verfüllmasse eingenommene Raumbereiche. Dies ist insbesondere dann problematisch, wenn dadurch eine ausreichende Abdichtung zwischen den Grundwasserleitern nicht mehr sichergestellt bleibt.

Es gibt daher Bestrebungen, den Grad der Verfüllung des Bohrlochs, in diesem Fall des Ringraumes zu überprüfen. Für Verfüllmassen der eingangs genannten Art mit hydraulischer Bindemittelkomponente macht man sich hierzu zunutze, dass derartige Verfüllmassen ohnehin üblicherweise Quarzsand oder Quarzmehl als weiteren Anteil enthalten. Ersetzt man ein Teil dieses Quarzsands oder Quarzmehls durch eine Beimischung aus Zirkonsand, der eine erhöhte natürliche Gammastrahlung aufweist, kann durch eine Messung der natürlichen Gammastrahlung von Ringraumhinterfüllung und Gebirge über einen sogenannten Gamma-Ray-Log ein Messsignal erhalten werden, das Aufschluss über die Homogenität der Dichteverteilung der Verfüllmasse gibt.

Der Erfindung liegt die Aufgabe zugrunde, ein Verfahren der eingangs genannten Art insbesondere unter Sicherheitsaspekten, aber auch unter Aspekten einer natürlichen Einbettung des Verfahrens in das umgebende Umweltsystem zu verbessern.

Diese Aufgabe wird von der Erfindung in verfahrenstechnischer Hinsicht durch eine Weiterbildung des Verfahrens der eingangs genannten Art gelöst, die im wesentlichen dadurch gekennzeichnet ist, dass lokale Inhomogenitäten in der Dichteverteilung der in dem Raum eingebrachten Verfüllmasse, insbesondere nicht von der Verfüllmasse eingenommene Raumbereiche, aufgrund eines in der Verfüllmasse enthaltenen Anteils eines magnetisch detektierbaren Materials erkennbar sind.

Dabei beruht die Erfindung auf der Erkenntnis, dass durch den Anteil des magnetisch detektierbaren Materials der Verfüllmasse die oben bereits erläuterten Fehlstellen mit einer vergleichsweise hohen Genauigkeit, die etwa im Zentimeter-Bereich liegt, zuverlässig erkennbar gemacht sind, und auch darauf, dass die Fehlstellen trotz eines nur geringen verfügbaren Raumes für eine das magnetisch detektierbare Material detektierende Messsonde (beispielsweise einem Innendurchmesser von 26 mm kleindimensionierter Erdwärmesonden) durch entsprechend klein dimensionierte Messsonden detektiert werden können.

Bei der Messsonde kann es sich um eine dem Grundprinzip nach bekannte Sonde zur Suszeptibilitätsmessung handeln (die Messung wird auch als Suszeptibilitäts-Log MAL bezeichnet), die in entsprechend kleiner Bauform herstellbar sind. Aufgrund einer bei der zur Herstellung der fließfähigen Verfüllmasse automatisch bewirkter Durchmischung der einzelnen Komponenten der der Verfüllmasse zugrundeliegenden Trockenmischung ist von einer im wesentlichen homogenen Verteilung des magnetisch detektierbaren Materials in der Verfüllmasse auszugehen. Eine Messung der Verteilung des magnetisch detektierbaren Materials entspricht somit einer Messung der Dichteverteilung der Verfüllmasse selbst. Fehlstellen, also Bereiche mit nahezu lokaler Dichte Null der Verfüllmasse werden dadurch erkennbar.

Neben der Möglichkeit eines zuverlässigen Nachweisverfahrens, kann bei dem erfindungsgemäßen Verfahren auch auf die Beimischung von Komponenten mit erhöhter Radioaktivität (z.B. Zirkonsand) verzichtet werden, und dadurch die natürliche Radioaktivität in der Umgebung des Bohrloches nicht zusätzlich erhöht werden.

In einer zweckmäßigen Verfahrensgestaltung wird auch nach und/oder vor dem Erstarren der Verfüllmasse deren Dichteverteilung in dem Raum durch Messung der lokalen magnetischen Flussdichte bestimmt. Aufgrund des Zusammenhangs zwischen (äußerlich angelegtem) magnetischem Feld H, der gemessenen Flussdichte B und der Suszeptibilität _{X} werden entsprechende Messmethoden auch als Suszeptibilitäts-Messungen bezeichnet (MAL). Aufgrund der aus der Auswertung der erhaltenen Messsignale erhaltenen Rückschlüsse über die Homogenität der Dichteverteilung der in dem Raum eingebrachten Verfüllmasse können entsprechende Fehlstellen identifiziert und auf ihre Relevanz hinsichtlich der angestrebten vertikalen Abdichtung der von der Bohrung durchteuften Grundwasserleiter begutachtet werden. Dieser öffnet Genehmigungsbehörden, Planern, Überwachern, Ausführungsfirmen und/oder Bauherren die Möglichkeit, die Qualität der Ausführung der Bohrlochverfüllung nachzuweisen, insbesondere rechtzeitig nachzuweisen, bevor zu einem späteren Zeitpunkt kaum wiedergutmachbare Schäden aufgrund der Fehlstellen entstehen.

Bei dieser Messung kann etwa wie folgt vorgegangen werden. In die Erdwärmesonde wird eine Messsonde, an einem Kabel hängend, bis zur Endteufe eingeführt. Die Kabellänge und die Spannung des Kabels werden zur Bestimmung der Position der Messsonde genutzt. Der Messvorgang selbst beginnt nach Abteufen der Sonde mit dem kontinuierlichen Ziehen der Sonde. Dabei wird in Abhängigkeit von der Sondenposition (Tiefe) die magnetische Suszeptibilität der Sondenumgebung mit Hilfe eines von der Sonde erzeugten (elektro)magnetischen Feldes bestimmt und aufgezeichnet. Das Verfahren benötigt keine zusätzlichen Installationen im Bohrloch, welche dauerhaft verbleiben, da die vorhandenen Rohre der Erdwärmesonde zur Befahrung des Bohrlochs genutzt werden können. Somit kann das Messverfahren auch bereits während des Verfüllvorganges ausgeführt werden, und damit auch die jeweils aktuelle Füllhöhe der Verfüllmasse im Bohrloch gemessen werden. Verluste in der pumpfähigen Suspension und/oder Fehlstellen sind somit zeitnah und in Abhängigkeit von der Verfüllhöhe feststellbar. Die gemessene magnetische Suszeptibilität stellt somit ein Qualitätskriterium für die Verfüllung dar. Auch eine mehrfache Ausführung der Messung ist möglich, insbesondere auch mit großem zeitlichen Abstand gegenüber dem Erstarren der Verfüllmasse. Somit lassen sich auch Langzeitkontrollen der Dauerhaftigkeit des verfüllten Bohrloches ausführen.

In diesem Zusammenhang kann vorgesehen werden, dass auf einen als nicht von der Verfüllmasse eingenommen erkannten Raumbereich vor und/oder nach Erstarren der Verfüllmasse in einer die Homogenität der Dichteverteilung erhöhenden Weise eingewirkt wird. Beispielsweise könnten über einen Zusatz-Absaugschlauch Lufteinschlüsse eliminiert werden. Später könnten auch Hilfsbohrungen zu diesen Raumbereichen gebohrt und entsprechende Reparaturmaßnahmen vorgenommen werden.

In produkttechnischer Hinsicht wird die Aufgabe durch eine nach Flüssigkeitszugabe zu einer fließfähigen Verfüllmasse verarbeitbare Trockenmischung mit einem aus einem hydraulischen Bindemittel gebildeten Anteil gelöst, die im wesentlichen durch einen aus einem magnetisch detektierbaren Material gebildeten Anteil gekennzeichnet ist.

Die Vorteile der erfindungsgemäßen Trockenmischung ergeben sich aus den oben erläuterten Vorteilen des erfindungsgemäßen Verfahrens.

Hinsichtlich der hydraulischen Bindemittelkomponente ist es bevorzugt, dass deren Anteil 8 Gew.% oder mehr beträgt, bevorzugt 15 Gew.% oder mehr, insbesondere 22 Gew.% oder mehr. Diese Angaben beziehen sich auf die Trockenmischung, wie auch die im folgenden erwähnten Gewichtsprozentangaben, sofern nicht explizit ein anderer Bezug genannt wird. Es können jedoch auch deutlich höhere hydraulische Bindemittelanteile von über 30%, über 40% und sogar über 50% verwendet werden. Andererseits wird es jedoch bevorzugt, dass der hydraulische Bindemittelanteil 70% nicht übersteigt, bevorzugt 60% nicht übersteigt und insbesondere nicht mehr als gewichtsmäßig die Hälfte der Trockenmischung ausmacht.

Hinsichtlich der Bindemittelkomponente selbst unterliegt die Erfindung keinen besonderen Einschränkungen. Obwohl ein Portlandzement oder eine Zementmischung auf Grundlage eines Portlandzements bevorzugt wird, können Hüttensande und/oder Flugaschen in Form von eben diesem Portlandzement, Portlandkompositzement, Portlandhüttenzement, Portlandsilikastaubzement, Portlandputzolanzement, Portlandflugaschezement, Portlandschieferzement, Portlandkalksteinzement, Hochofenzement, Putzolanzement oder Kompositzemente herangezogen werden, um einige weitere Kandidaten für das hydraulisch erstarrende Bindemittel anzugeben.

In diesem Zusammenhang wird es auch bevorzugt, dass das hydraulische Bindemittel aus Normzementen nach EN 107-1, Zemente nach DIN 1164 und/oder aus Mischungen von solchen Normzementen mit Hüttensandmehlen DIN EN 15167 Teil 1 und/oder Flugaschen EN 450 besteht oder diese aufweist.

Insbesondere für die oben erläuterte Anwendung in der Geothermie wird es besonders bevorzugt, wenn die Trockenmischung weiter eine quellfähige Tonkomponente aufweist, insbesondere mit einem Anteil von 0,4 Gew.% oder höher, bevorzugt 2 Gew.% oder höher, insbesondere 6 Gew.% oder höher. Dabei können auch nochmals höhere Anteile von 8% oder mehr zur Anwendung kommen. Die Tonkomponente hat aufgrund ihrer Quellwirkung Bedeutung für die Abdichtwirkung und auch für das Sedimentationsverhalten bei hohen Wasser-/Feststoffwerten. Ein bevorzugtes Beispiel für eine solche quellfähige Tonkomponente ist Bentonit. Es wird jedoch bevorzugt, dass die Tonkomponente 25 Gew.% nicht übersteigt, bevorzugt bereits 20 Gew.% nicht übersteigt, insbesondere 15 Gew.% nicht übersteigt, um eine möglichst hohe Frostbeständigkeit der erstarrten Verfüllmasse beizubehalten.

Wie oben bereits erläutert, kann die Trockenmischung, die ja zu einer pumpfähigen Verfüllmasse verarbeitet werden soll, einen der Verarbeitbarkeit dienenden Füllstoff aufweisen, insbesondere Quarzsand oder Quarzmehl, mit einem Anteil von 12 Gew.% oder mehr, bevorzugt 25 Gew.% oder mehr, insbesondere 40 Gew.% oder mehr. Auch höhere Anteile von 50 Gew.% oder mehr und 60 Gew.% oder mehr sind denkbar. Es kann jedoch auch vorgesehen werden, einen Teil, sogar einen überwiegenden Teil des Quarzsandes/Quarzmehls durch ein Gesteinsmehl zu ersetzen. Der Anteil an Gesteinsmehl in der Trockenmischung könnte dann ohne weiteres 20% oder mehr, auch 30% oder mehr, insbesondere auch 40% oder mehr betragen, wobei auch geringere Gesteinsmehlanteile denkbar sind.

Hinsichtlich des Anteils des magnetisch detektierbaren Materials ist auf einen wenigstens so hohen Anteil abzustellen, dass die beabsichtigte Nachweisbarkeit gewährleistet bleibt. Dazu sollte der Anteil wenigstens 0,1 Gew.% oder mehr, bevorzugt wenigstens 0,8 Gew.% oder mehr betragen. Allerdings werden durchaus auch Untergrenzen von wenigstens 1,5 Gew.% oder auch 2,0 Gew.% als durchaus zweckmäßig betrachtet, um auch Messsystemen niedrigerer Auflösung zugänglich zu sein.

Andererseits ist in einer Erfindungsvariante vorgesehen, daß der Anteil des magnetisch detektierbaren Materials 5,6 Gew.% nicht übersteigt, bereits 4,8 Gew.% nicht übersteigt, insbesondere 4,0 Gew.% nicht übersteigt, bezogen auf die Trockenmischung. Bezogen auf eine aus einer solchen Trockenmischung durch Flüssigkeitszugabe hergestellten fließfähigen Verfüllmasse wird es bevorzugt, wenn der Gewichtsanteil des magnetisch detektierbaren Materials 3% nicht übersteigt, auch 2,6% nicht übersteigt, durchaus auch 2,3% nicht übersteigt, insbesondere 2,0% nicht übersteigt. Wiederum bezogen auf die Trockenmischung ist durchaus auch vorgesehen, daß der Gewichtsanteil des magnetisch detektierbaren Materials 3,6% nicht übersteigt, auch 3,2% nicht übersteigt, insbesondere 2,8% nicht übersteigt. Auf diese Weise wird die Gefügefestigkeit der aus der Trockenmischung/fließfähigen Verfüllmasse geschaffenen Füllung nicht in schädlicher Weise beeinträchtigt.

Das magnetisch detektierbare Material kann pulverförmig vorliegen. Es wird jedoch auch an Varianten gedacht, in denen es granulatförmig enthalten ist. Die magnetischen Eigenschaften des magnetisch detektierbaren Materials, insbesondere magnetisierbaren Materials sind von deren Korngröße abhängig. Grundsätzlich wird für die Nachweisbarkeit eine eher große Korngröße bevorzugt. Andererseits ist zu berücksichtigen, dass bei höherer Dichte des magnetisch detektierbaren Materials gegenüber der der anderen Komponenten der Trockenmischung die Entmischungswahrscheinlichkeit steigt, also die oben erläuterte Tendenz zu einer gleichmäßigen Verteilung des magnetisch detektierbaren Materials in der fließfähigen Verfüllmasse vermindert wird. Aufgrund dieser einander entgegengesetzten Wirkungen wird im Rahmen der Erfindung bevorzugt, dass 95% oder mehr des magnetischen Materials eine Korngröße im Bereich zwischen 0,001 mm und 20 mm aufweist, bevorzugt zwischen 0,01 mm und 0,25 mm.

Als magnetisch detektierbares Material selbst kommen grundsätzlich Eisen, Nickel und Kobalt sowie deren Verbindungen, insbesondere Legierungen und/oder Mischungen grundsätzlich in Frage. Besonders bevorzugt soll das magnetisch detektierbare Material jedoch ein ferrimagnetisches Material aufweisen oder daraus bestehen. Ein Beispiel dazu wäre Maghemit, besonders bevorzugt soll das magnetisch detektierbare Material jedoch Magnetit aufweisen oder daraus bestehen.

Magnetit ist eines der Materialien geogenen Ursprungs mit der höchsten natürlich vorkommenden magnetischen Suszeptibilität, zu deren Nachweis auch vergleichsweise geringe Magnetitkonzentrationen in der Verfüllmasse genügen. Zudem ist Magnetit auch hochbeständig gegen Säuren und Laugen, es bedarf daher keiner besonderen Rücksichtnahme hinsichtlich weiterer Komponenten oder Verfahrensschritten. Auch in der Beschaffung und Lagerung lässt sich Magnetit unkompliziert handhaben. Die Ursache für die hohe Suszeptibilität wird in der besonderen Bindung der Eisenkomponente und deren energetisch günstige Anordnung im Kristallgitter des Magnetits gesehen. So zeichnet sich Magnetit durch besondere Bindung des Eisens dahingehend aus, dass im Magnetit verschiedene Oxidationsstufen von Eisen vorkommen (Fe⁺⁺ und Fe⁺⁺⁺).

Im Rahmen der Erfindung ist weiter herausgefunden worden, dass entgegen den Erwartungen die Komponente des magnetisch detektierbaren Materials, beispielsweise Magnetit, die Wärmeleitfähigkeit der späteren erstarrten Verfüllmasse nicht aufgrund der vergleichsweise hohen Wärmeleitfähigkeit (5,1 W/(m·K) nach Zeitschrift Kunststoffe 11/2004, Seite 84, Tabelle 1, Carl Hauser Verlag München) von Magnetit selbst erhöht, sondern die Gesamtwärmeleitfähigkeit eher herabsetzt. Gemäß einem weiteren Erfindungsaspekt wird daher eine Kompensation in Form einer Erhöhung der Wärmeleitfähigkeit dienenden Zusatzkomponente vorgeschlagen. Diese kann mit einem Anteil von 0,2 Gew.% oder höher, bevorzugt 1 Gew.% oder höher, weiter bevorzugt 2 Gew.% oder höher, aber auch nochmals höher, beispielsweise 3 Gew.% oder höher vorgesehen werden.

Bevorzugt könnte diese Zusatzkomponente Korund, Siliciumcarbid und/oder eine Mischung aus diesen aufweisen oder daraus bestehen.

Desweiteren kann die Trockenmischung ein Fließmittel aufweisen, bevorzugt mit einem Anteil von nicht höher als 4 Gew.%, bevorzugt nicht höher als 3,2 Gew.%, insbesondere nicht höher als 2,4 Gew.%.

Die Trockenmischung kann noch weitere Bestandteile enthalten, insbesondere ein Fließmittel mit einem Anteil von 0,02 Gew.% oder höher, bevorzugt 0,1 Gew% oder höher, insbesondere 0,16 Gew.% oder höher, wobei das Fließmittel bevorzugt ein Polycarboxylatether oder deren Mischungen mit Ligninsulfonaten oder Melaminformaldehydkondensaten aufweist oder daraus besteht. Grundsätzlich sind jedoch auch andere Fließmittel denkbar, beispielsweise ausgewählt aus der Gruppe enthaltend Lignin- und Naphtalinsulfonate, sulfonierte Naphtalinformaldehydkondensate, sulfonierte Phenolformaldehydkondensate, Melaminformaldehydkondensate, Acrylsäure bzw. Acrylamid-Gemische oder deren Mischungen.

Desweiteren kann die Trockenmischung einen Stabilisierer aufweisen, bevorzugt mit einem Anteil von nicht höher als 4 Gew.%, bevorzugt nicht höher als 3,2 Gew.%, insbesondere nicht höher als 2,4 Gew.%.

Derartige Stabilisierer sind in der Technik bekannt, es kann beispielsweise zurückgegriffen werden auf Stärken oder deren Derivate, Vernetzte Stärken, Carboxymethylstärken bzw. -cellulosen, Hydroxymethylcellulosen, Hydroxyethylcellulosen, Methylhydroxypropylcellulosen, Methylhydroxethylcellulosen, Methylzellulosen, Alginate, Dextrine, Xantane, Pectin, Tragant oder Pullulan.

Alternativ kann auch vorgesehen werden, dass der Stabilisierer nicht bereits in der Trockenmischung enthalten ist, sondern der fließfähigen Verfüllmasse zugegeben wird, insbesondere vor Ort der Anwendung der Verfüllmasse.

Desweiteren wird von der Erfindung unter Schutz gestellt eine aus einer Trockenmischung nach einem der vorgenannten Aspekte durch Zugabe einer Flüssigkeit hergestellte fließfähige Verfüllmasse, insbesondere fließfähige pumpfähige Verfüllmasse. Die Flüssigkeit kann einfach Wasser sein.

In einer besonders bevorzugten Ausführungsform hat die Verfüllmasse eine Wärmeleitfähigkeit im erstarrten Zustand von 1,7 W/(m·K) oder höher, insbesondere 2,0 W/(m·K) oder höher. Derartig hohe Wärmeleitfähigkeiten der erstarrten Verfüllmasse werden insbesondere für deren oben bereits erläuterte Anwendung in der Geothermie als vorteilhaft und insbesondere auch durch Vorgaben erwünscht angesehen.

Die Erfindung ist jedoch nicht auf die Verwendung der Trockenmischung oder auch des erfindungsgemäßen Verfahrens auf Anwendungen der Geothermie eingeschränkt.

So könnten diese auch im Brunnenbau zum Einsatz kommen. Bei diesem werden Rohre in Bohrlöcher eingebracht und im Anschluss mittels der fließfähigen Verfüllmasse im Ringraum verfüllt, welcher wiederum der Spalt zwischen Leitungs- oder Brunnenrohren und deren umgebenden Medien (Boden, Fels, Rohr, Schacht usw.) gegeben ist. Wiederum ist sicherzustellen, dass über den Ringraum vertikale Wasserwegsamkeiten auszuschließen sind, also Grundwasserleiter nach Abschluss der Baumaßnahme keinen hydraulischen Kontakt zueinander haben.

Grundsätzlich sind auch weitere Anwendungen denkbar, bei denen es auf die Nachweisbarkeit einer möglichst vollständigen Ausfüllung des dafür vorgesehenen Raumes ankommt, beispielsweise bei Grundwassermessstellen, Überprüfungen von Mantelmischungen für Injektionslanzen, die Qualitätssicherung von Injektionskörpern im Düsenstrahlverfahren, die einerseits Injektionen und andererseits Bodenvermörtelungen z.B. im Düsenstrahl- oder Nassbodenmischverfahren umfasst, die Herstellung von Energiepfählen oder auch Verfüllmaterial für Rohrleitungsgräben.

Diese weiteren Anwendungen werden im folgenden ebenfalls noch etwas genauer erläutert:

### Qualitätssicherung von Injektionskörpern im Düsenstrahlverfahren (DSV)

Beim Düsenstrahlverfahren wird mittels eines Hochdruck-Schneidstrahles das vorhandene Gefüge eines Bodens aufgeschnitten. Dabei kann der Schneidstrahl aus Wasser oder aus Zementsuspension bestehen. Während oder nach dem Aufschneiden des Bodens wird das gelöste Gefüge mit einem Baustoff aus Zementsuspension oder einer Suspension aus Zement und Wasser und gegebenen Falls Zusätzen aus Gesteinsmehlen und Tonen vermischt. Nach dem Abbinden entstehen so Gefüge welche in der Regel aus Kreissegmenten oder kompletten Säulen bestehen. Der Radius der Kreissegmente wird im Allgemeinen durch Probekörper im Referenz-Baugrund überprüft. Da die auszuführenden DSV-Köper oft in tiefen Bodenschichten liegen, ist ein Freilegen der Probekörper nicht im

Eine Markierung des Baustoffes unter Zugabe von Magnetit ermöglicht, dass über einfache Bohrungen, welche ausgebaut oder unausgebaut mit einer magnetischen Suszeptibilitätssonde befahren werden, das Vorhandensein des Baustoffes detektiert werden kann und somit Rückschlüsse auf die erreichbaren Radien des Verfahrens getroffen werden können.

### Qualitätssicherung von Injektionskörpern im Lockergestein

Bei der Injektion im Lockergestein wird eine Suspension aus Zement und Wasser, ggf. mit Zusätzen, bei einem Wasser-/Zementwert von meist größer/ gleich 1,0, der vorhandene Porenraum im Gefüge infiltriert und verfestigt. Zur Überprüfung der Reichweite des Injektionsköpers werden diese nach Möglichkeit freigelegt oder mit Bohrungen überprüft. Eine Markierung der Suspension unter Zugabe von Magnetit ermöglicht dass über einfache Bohrungen, welche ausgebaut oder unausgebaut mit einer magnetischen Suszeptibilitätssonde befahren werden, das Vorhandensein der Suspension detektiert werden kann und somit Rückschlüsse auf die erreichbaren Reichweiten des Verfahrens getroffen werden können.

In besonderen Fällen kann das Injektionsgut auch aus chemischen Komponenten bestehen. Zum Beispiel Weichgelinjektion, Injektion mit Kunstharzen oder anderen abdichtenden und oder erhärtenden Komponenten. Hierbei könnte ebenfalls das Injektionsgut mit Magnetit markiert werden.

### Brunnenausbau und Ausbau von Grundwassermessstellen

Für die Herstellung von Brunnen und Grundwassermessstellen wird im Allgemeinen eine Bohrung abgeteuft, welche einen größeren Durchmesser als der einzubauende Brunnen oder die Grundwassermessstelle besitzt. Darin kann das Brunnenrohr oder die Grundwassermessstelle eingebaut und im Filterbereich mit dem gewünschten Filtermaterial versehen werden.

Der entstandene Ringraum um das Brunnenrohr oder die Grundwassermessstelle muss dann verfüllt werden. Dabei müssen wassersperrende Schichten, welche durchbohrt wurden, in ihrer Funktion wiederhergestellt werden und eine Abdichtung gegen eindringendes Wasser von der Oberfläche gewährleistet werden. Zur Abdichtung werden entweder Tonpellets welche in den Ringraum geschüttet werden verwendet oder es werden Ton-Zementsuspensionen eingebaut. Die Tonpellets sinken, meist in Wasser oder Stützflüssigkeiten, auf die erforderliche Tiefe und quellen dort zu einer Tondichtung auf. Zum Beschleunigen der Sinkgeschwindigkeit können die Tonpellets mit gewichtssteigernden Zusätzen angereichert werde. Zum Beispiel bei dem Produkt Qellon HD unter Verwendung von Magnetit. Hierbei hat man nachträglich festgestellt, dass die Tondichtung mit Quellon HD über eine magnetische Suszeptibilitätsmessung, bei Befahrung des Brunnenrohres (aus Kunststoff) mit einer magnetischen Suszeptibilitätssonde, nachweisbar ist. Eine andere Art der Nachweisbarkeit ist die Anreicherung der Tonpellets mit einem Stoff welcher eine erhöhte natürliche Eigenstrahlung aufweist. Zum Beispiel im Produkt Quellon WP unter Verwendung von Zirkonsand.

Ton-Zementsuspensionen werden über Verfüllleitungen an die gewünschte Position gepumpt und bilden dort eine erhärtende und abdichtende Masse. Hier ist eine Markierung des Baustoffes unter Zugabe von Magnetit eine Möglichkeit um das Vorhandensein und die Homogenität des Materials an der gewünschten Position, zum Beispiel in Höhe einer Wasser sperrenden Bodenschicht, bei Befahrung des Brunnens oder der Grundwassermessstelle mit einer magnetischen Suszeptibilitätssonde nachzuweisen. Eine andere Art der Markierung von Ton-Zement-Suspension ist die Markierung mit einem Stoff welcher eine erhöhte natürliche Eigenstrahlung besitzt (analog wie bei Quellon WP, z.B. mit Zirkonsand).

### Überprüfung von Mantelmischungen für Injektionslanzen

Mantelmischungen sind in der Regel Mischungen aus Zement und gegebenen Falls Tonen und/oder gegebenenfalls Gesteinsmehlen welche für die Einbettung von Injektionslanzen mit einer oder mehreren Injektionsstufen in Bohrungen verwendet werden. Die Aufgabe der Mantelmischungen besteht darin, den Ringraum um die Injektionslanze, Hohlraumfrei in die Bohrung einzubetten und nach der Öffnung des Injektionsventils zu gewährleisten, dass das Injektionsgut nicht in der Bohrung umläufig wird sondern in das angrenzende Lockergestein geleitet wird.

Bei einer Markierung der Mantelmischung mit Magnetit kann bei Befahrung der Injektionslanze aus Kunststoff mit einer magnetischen Suszeptibilitätssonde das Vorhandensein sowie die Homogenität der Mantelmischung gemessen werden.

### Verfüllbaustoffe

Der Anwendungsbereich umfasst Baustoffe zur Verfüllung von schwer oder nicht zugänglichen Hohlräumen. Er betrifft in der Regel Mischungen aus Zement und gegebenenfalls Tonen und/oder gegebenenfalls Gesteinsmehlen. Der Einbau erfolgt in der Regel über Verfüllleitungen. Der Baustoff ist fließfähig und breitet sich dadurch in den Hohlräumen fließend aus. Ein Nachweis der ordnungsgemäßen Verfüllung der Hohlräume ist wegen der schlechten Zugänglichkeit kaum möglich und kann nur mit Befahrung durch technische Hilfsmittel oder über Bohrungen erfolgen.

Bei einer Markierung der Mantelmischung mit Magnetit kann eine magnetische Suszeptibilitätssonde zur Befahrung verwendet werden und das Vorhandensein des Baustoffes detektiert werden.

Weitere Erläuterungen zu der Erfindung, Einzelheiten und Vorteile ergeben sich aus der nachfolgenden Beschreibung unter Bezugnahme auf die beigelegten Figuren, von denen
Fig. 1 Messergebnisse eines ersten Testversuches wiedergibt und
Fig. 2 Messergebnisse eines zweiten Testversuches wiedergibt.

Die Wirksamkeit der Erfindung wurde anhand von Testversuchen belegt. Dazu wurde zunächst ein Verfüllmaterial mit der folgenden Zusammensetzung hergestellt:
19 Gew.% hydraulisches Bindemittel (Zementkomponente)
6,07 Gew.% quellfähige Tonkomponente
1,8 Gew.% Magnetit
40 Gew.% Quarzsand
0,13 Gew.% Fließmittel
33 Gew.% Wasser

Da sich das Beispiel auf die pumpfähige Verfüllmasse selbst bezieht, beziehen sich die Gewichtsprozentangaben des Ausführungsbeispiels nicht wie oben auf die Trockenmischung, sondern auf das Gesamtgewicht des fließfähigen Verfüllmaterials. Variationen der einzelnen Komponenten, insbesondere im Rahmen der oben aufgeführten bevorzugten Bereiche, sind möglich und für die tatsächlichen Anwendungen heranziehbar.

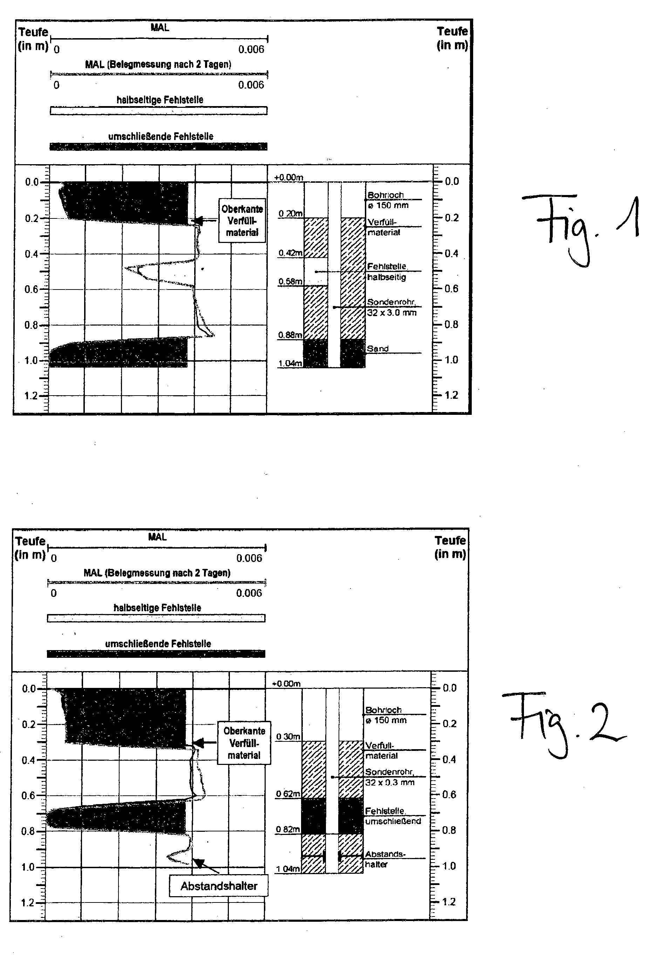

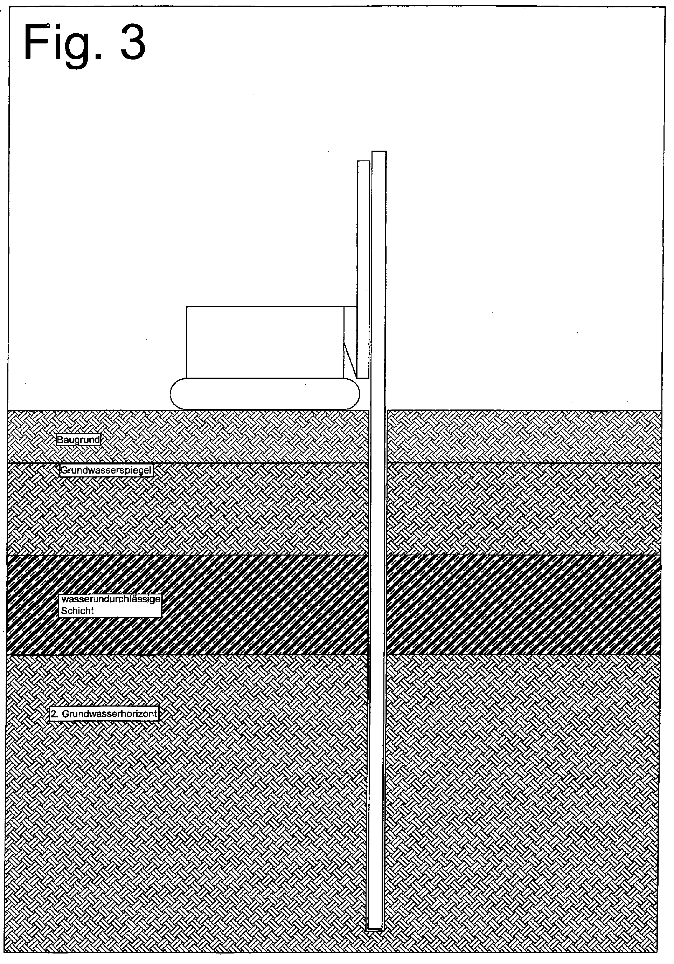

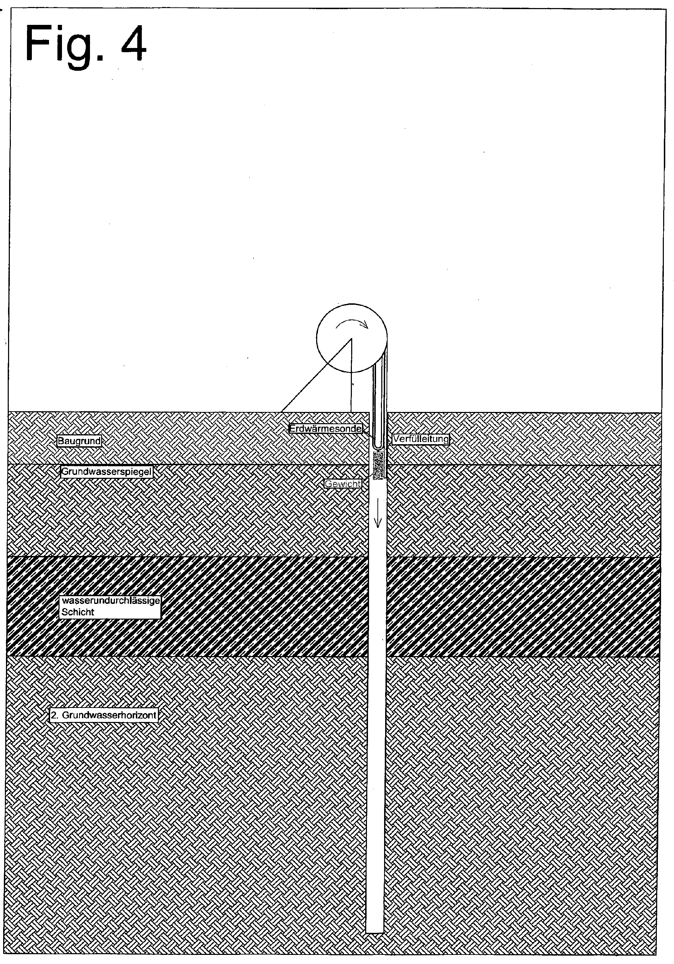

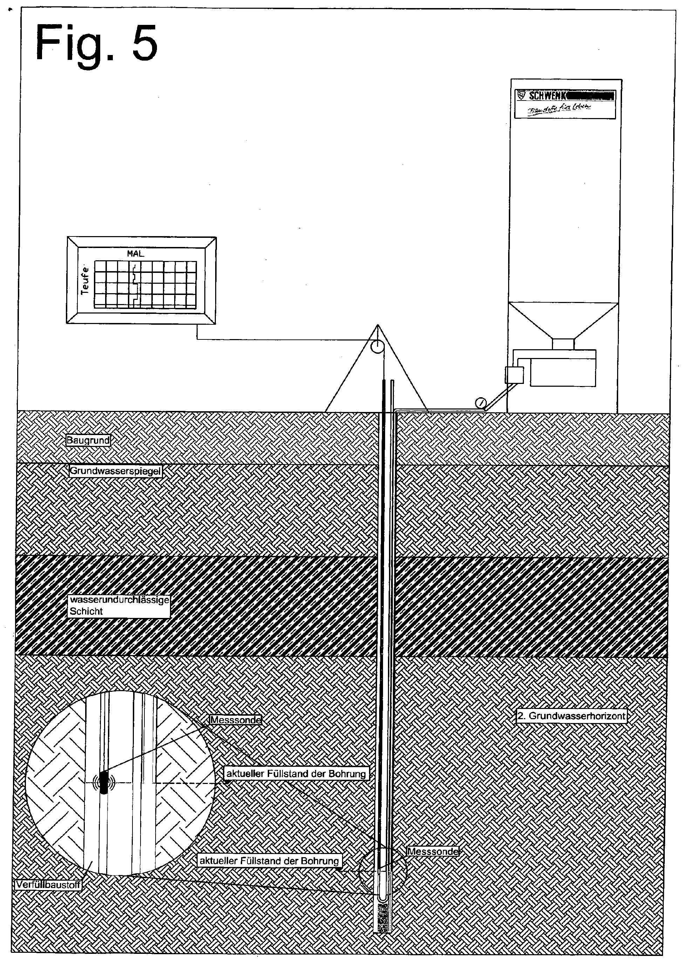

Für den in Fig. 1 wiedergegebenen Test wurde ein Bohrloch präpariert. Bei einer Gesamttiefe von 1,04 m wurden die untersten 16 cm Füllhöhe mit Sand aufgefüllt. Damit soll eine vollflächige Fehlstelle simuliert werden, die beispielsweise durch einen Materialausbruch aus der Bohrwand in den Bohrungsschacht darstellen könnte. Eine weitere Fehlstelle wurde in Form eines eingelegten Fremdkörpers zwischen 42 cm und 58 cm Tief, halbseitig, simuliert. Das Bohrloch selbst hat einen Durchmesser von 15 cm und zentral wurde ein Sondenrohr mit 32 mm Durchmesser verlegt. Auf diese Weise wurden annähernd die realen Größenverhältnisse von Erdwärmesonde und Bohrloch simuliert.

Anschließend wurde der verbleibende Ringraum mit der über die Magnetit-Komponente markierten Suspension der oben angegebenen Zusammensetzung verfüllt, so dass die Suspensionsoberkante bei 20 cm Tiefe lag.

Nach zwei Tagen bei noch frischer Suspension (schwarze Messlinie) wurde mit einer Miniatur-Magnetic-Log-Sonde (MAL) gemäß dem oben erläuterten Messverfahren eine Suszeptibilitätsmessung durchgeführt, deren Ergebnisse höhenabhängig in Fig. 1 links unten als Messkurve aufgezeichnet ist. Nicht nur die durch die Sandschüttung simulierte Fehlstelle, sondern auch der Bereich oberhalb der Suspensionsoberkante sind aus der Messkurve als umschließende Fehlstelle deutlich zu erkennen. Auch die halbseitige Fehlstelle zwischen 42 cm und 58 cm Tiefe ist durch die Messung detektierbar. Die Messgenauigkeit liegt erkennbar in der Größenordnung von Zentimetern.

Eine weitere nach zwei Tagen durchgeführte Vergleichsmessung bei erstarrtem Verfüllmaterial (hellgraue Linie) führt zu nahezu identischen Messergebnissen wie bei der Messung bei noch frischer Suspension (schwarze Linie).

Für einen weiteren, anhand von Fig. 2 erläuterten Text wurde das Bohrloch unterschiedlich präpariert. Die Sandschüttung am Boden des Bohrlochs wurde weggelassen, statt dessen wurde bei 92 bis 98 cm Tiefe ein Abstandshalter eingebaut. In dem Bereich zwischen 62 und 82 cm Bohrlochtiefe wurde ein vollflächiger Fremdkörper eingebaut. Die Suspensionsoberkante wurde 10 cm nach unten verlegt.

Wie aus den ansonsten in gleicher Weise hergestellten Messkurven in Fig. 2 links unten erkennbar ist, wurden sowohl die vollflächige Fehlstelle als solche detektiert, als auch die Suspensionsoberkante zentimetergenau erfasst. Selbst der Abstandshalter ist aus den Messkurven erkennbar.

Trotz der vergleichsweise hohen Wärmeleitfähigkeit von Magnetit wurde durch Anfertigen von Probekörpern mit einem in 2,5% Schritten bis auf 10 Masseprozent Magnetit hergestellte Probekörper auf ihre Wärmeleitfähigkeit mit dem Ergebnis untersucht, dass bei steigendem Magnetitzusatz nicht die erwartete Wärmeleitfähigkeitserhöhung, sondern eine geringfügige Wärmeleitfähigkeitsverminderung gegenüber einem magnetitfreien Probekörper festgestellt wurde.

Weitere Versuche unter Zugabe von Korund oder Siliciumcarbid zu den Probekörpern führten dagegen zu einer um 0,1 W/(m)·K gestiegenen Wärmeleitfähigkeit bei zweiprozentigem Korund-/Siliciumcarbid-Anteil bezogen auf die fließfähige Verfüllmasse. Eine Verdopplung dieses Anteils führte zu einer um nochmals 0,1 W/(m·K) gesteigerten Wärmeleitfähigkeit.

Als weiteres Ausführungsbeispiel einer fließfähigen Verfüllmasse mit erhöhter, über 2,0 W/(m·K) liegenden Wärmeleitfähigkeit im erstarrten Zustand ist daher durch folgende Zusammensetzung gegeben, deren Gewichtsprozentangaben sich auf die fließfähige Verfüllmasse bezieht:
17,66 Gew.% hydraulisches Bindemittel (Zementkomponente)
6,07 Gew.% quellfähige Tonkomponente
1,8 Gew.% Magnetit
1,34 Gew.% Korund
40 Gew.% Quarzsand
0,13 Gew.% Fließmittel
33 Gew.% Wasser

Die Erfindung ist nicht auf die anhand der Figurenbeschreibung spezifizierten Ausführungsformen eingeschränkt. Vielmehr können die Merkmale der obigen Beschreibung wie auch die der nachstehenden Ansprüche einzeln oder in Kombination für die Verwirklichung der Erfindung in ihren verschiedenen Ausführungsformen wesentlich sein.

## Patentansprüche

1. Verfahren zum Füllen eines Raumes, insbesondere Hohlraumes, mit einer fließfähigen Verfüllmasse, bei dem die Verfüllmasse in den Raum eingebracht wird und dort aufgrund eines enthaltenen hydraulischen Bindemittelanteils durch Hydratisierung erstarrt,
**dadurch gekennzeichnet, dass**
lokale Inhomogenitäten in der Dichteverteilung der in dem Raum eingebrachten Verfüllmasse, insbesondere nicht von der Verfüllmasse eingenommene Raumbereiche, aufgrund eines in der Verfüllmasse enthaltenen Anteils eines magnetisch detektierbaren Materials erkennbar sind.

2. Verfahren nach Anspruch 1, bei dem nach und/oder vor dem Erstarren der Verfüllmasse deren Dichteverteilung in dem Raum durch Messung der lokalen magnetischen Flussdichte bestimmt wird.

3. Verfahren nach Anspruch 1 oder 2, bei dem auf einen als nicht von der Verfüllmasse eingenommen erkannten Raumbereich vor und/oder nach Erstarren der Verfüllmasse in einer die Homogenität der Dichteverteilung erhöhenden Weise eingewirkt wird.

4. Verfahren nach einem der vorhergehenden Ansprüche, bei dem der Raum ein einen für eine Geothermiesonde vorgesehenen Bereich umgebender, insbesondere ringförmiger Raum einer ins Erdreich führenden Bohrung ist, und die erstarrte Verfüllmasse dem Halten der Geothermiesonde und der Wärmeübertragung zwischen dieser und dem umgebenden Erdreich dient.

5. Nach Flüssigkeitszugabe zu einer fließfähigen Verfüllmasse verarbeitbare Trockenmischung, mit
aus einem hydraulisch gebildeten Bindemittelanteil,
**gekennzeichnet durch** einen aus einem magnetisch detektierbaren Material gebildeten Anteil.

6. Trockenmischung nach Anspruch 5, bei der der Anteil des insbesondere Portlandzement aufweisenden oder daraus bestehenden hydraulischen Bindemittels 8 Gew.% oder mehr beträgt, bevorzugt 15 Gew.% oder mehr beträgt, insbesondere 22 Gew.% oder mehr beträgt.

7. Trockenmischung nach Anspruch 5 oder 6, weiter mit einer quellfähigen Tonkomponente, insbesondere mit einem Anteil von 0,4 Gew.% oder höher, bevorzugt 2 Gew.% der höher, insbesondere 6 Gew.% oder höher.

8. Trockenmischung nach einem der Ansprüche 5 bis 7, weiter mit einem der Verarbeitbarkeit dienenden Füllstoff, insbesondere Quarzsand oder Quarzmehl, mit einem Anteil von 12 Gew.% oder mehr, bevorzugt 25 Gew.% oder mehr, insbesondere 40 Gew.% oder mehr.

9. Trockenmischung nach einem der Ansprüche 5 bis 8, bei der der Anteil des magnetisch detektierbaren Materials 0,1 Gew.% oder mehr, bevorzugt 0,8 Gew.% oder mehr, insbesondere 1,5 Gew.% oder mehr beträgt.

10. Trockenmischung nach einem der Ansprüche 5 bis 9, bei der das magnetisch detektierbare Material pulverförmig oder granulatförmig enthalten ist.

11. Trockenmischung nach einem der Ansprüche 5 bis 10, bei der 95% oder mehr des magnetischen Materials eine Korngröße im Bereich zwischen 0,001 mm und 20 mm aufweist, bevorzugt zwischen 0,01 mm und 0,25 mm.

12. Trockenmischung nach einem der Ansprüche 5 bis 11, bei dem das magnetisch detektierbare Material ein ferrimagnetisches Material aufweist oder daraus besteht, insbesondere Magnetit.

13. Trockenmischung nach einem der Ansprüche 5 bis 12, mit einer der Erhöhung der Wärmeleitfähigkeit dienenden Zusatzkomponente, insbesondere mit einem Anteil von 0,2 Gew.% oder höher, bevorzugt 1 Gew.% oder höher, weiter bevorzugt 2,5 Gew.% oder höher, insbesondere 4 Gew.% oder höher.

14. Trockenmischung nach Anspruch 13, bei der die Zusatzkomponente Korund und/oder Siliciumcarbid aufweist oder daraus besteht.

15. Trockenmischung nach einem der Ansprüche 5 bis 14, weiter enthaltend ein Fließmittel mit einem Anteil von 0,02 Gew.% oder höher, bevorzugt 0,1 Gew.% oder höher, insbesondere 0,16 Gew.% oder höher, wobei das Fließmittel bevorzugt ein Polycarboxylatether oder deren Mischungen mit Ligninsulfonaten oder Melaminformaldehydkondensaten aufweist.

16. Fließfähige Verfüllmasse, hergestellt aus einer Trockenmischung nach einem der Ansprüche 5 bis 15 durch Zugabe einer Flüssigkeit, insbesondere Wasser.

17. Verfüllmasse nach Anspruch 16, bei der das Mischverhältnis Trockenmischung:Flüssigkeit 4:1 oder kleiner ist, bevorzugt 3:1 oder kleiner, insbesondere 3:2 oder kleiner und bevorzugt 2:3 oder größer, insbesondere 1:1 oder größer ist.

18. Verfüllmasse nach Anspruch 16 oder 17, mit einer Wärmeleitfähigkeit im erstarrten Zustand von 1,7 W/(m·k) oder höher, insbesondere 2,0 W/(m·k) oder höher.

19. Verwendung einer Trockenmischung nach einem der Ansprüche 5 bis 15 und/oder einer fließfähigen Verfüllmasse nach Anspruch 16 bis 18 zur Schaffung einer eine in einer Bohrung im Erdreich angeordnete Geothermiesonde haltende und Wärme zwischen ihr und dem umgebenden Erdreich austauschenden Verbindung.
